## Europäisches Patentamt

## European Patent Office

## Office européen des brevets

(11) Publication number: **0 107 892**
**B1**

(12) **EUROPEAN PATENT SPECIFICATION**

(45) Date of publication of patent specification: **19.11.87**

(21) Application number: **83304925.7**

(22) Date of filing: **25.08.83**

(51) Int. Cl.⁴: **B 60 P 1/48**

(54) Equipment for loading an exchange platform or a container.

(30) Priority: **27.09.82 FI 823317**

(43) Date of publication of application:
**09.05.84 Bulletin 84/19**

(45) Publication of the grant of the patent:
**19.11.87 Bulletin 87/47**

(84) Designated Contracting States:
**AT BE CH DE FR GB IT LI LU NL SE**

(56) References cited:
**CH-A- 512 345**
**DE-A-2 522 896**
**DE-A-2 742 669**
**DE-B-2 726 353**
**FR-A-2 442 213**
**GB-A-2 092 993**

(73) Proprietor: **MULTILIFT LTD**
**Ainsdale Drive Harlescott Industrial Estate**
**Shrewsbury Salop SY1 3TJ (GB)**

(72) Inventor: **Raisio, Reijo**
**Eskonkatu 11 A 20**
**F-20340 Turku 34 (FI)**
Inventor: **Sutela, Leo**
**Vaha-Hameenkatu 9 C 73**
**F-20500 Turku 50 (FI)**

(74) Representative: **Topps, Ronald et al**
**D. YOUNG & CO 10 Staple Inn**
**London WC1V 7RD (GB)**

Courier Press, Leamington Spa, England.

## Description

The present invention is concerned with equipment for loading an exchange platform or a container onto a truck or truck trailer and for removal of it from same.

As disclosed herein, the equipment comprises an auxiliary frame pivotably mounted onto the chassis beams of the truck or trailer by means of a transverse horizontal shaft or articulated joints fitted to the chassis beams at a distance forwards from support rolls which are fitted at the rear ends of the chassis beams. To the auxiliary frame, a loading frame is pivotally attached by one end by means of a transverse horizontal shaft or articulated joints, the free end of the said loading frame being provided with a grasping means for engaging the grasping member of the exchange platform or container.

Equipment comprising an auxiliary frame pivotably mounted on the chassis beams of a vehicle, and having a loading frame pivotably attached to the auxiliary frame has been disclosed, e.g. in GB—A—2 092 993. Such equipment usually includes a grasping means, e.g. a hook, at the free end of the loading frame. The loading frame is often L-shaped as seen in side elevation. To pivot the auxiliary frame (referenced 2 in GB—A—2 092 993) relative to the chassis a ram is included. To pivot the loading frame relative to the auxiliary frame a further ram is provided. This arrangement necessitates the use of a particularly large and expensive main ram, however.

Other forms of loading equipment of this general type are shown in German Patent Application (DE-A) 2 522 896, German Patent Application (DE-B) 2 726 353 and French Patent Application (FR-A) 2 422 213.

An aim of the present invention is to provide a simple and reliable hook-device type of loading equipment.

In accordance with the invention there is provided equipment for loading and unloading an exchange platform or a container onto a vehicle located on a ground plane, the equipment comprising an auxiliary frame mounted for pivoting about an articulated joint located a substantial distance forwardly of the rear of the vehicle and herein referred to as a fourth articulated joint, an L-shaped loading frame having a first part one of whose ends is pivotably attached by a first articulated joint to the auxiliary frame and a second part whose free end is provided with a grasping means for engaging a grasping member of the platform or container; the equipment further comprising a first cylinder-piston means herein called a first ram for pivoting the loading frame relative to the auxiliary frame, the first ram having one end pivotally connected to the auxiliary frame at a second articulated joint and the other end pivotally connected to the loading frame at a third articulated joint, the first articulated joint being located intermediate the second and fourth articulated joints; and a second ram having one end pivotally connected to the vehicle at a fifth articulated joint and its other end pivotally connected to the auxiliary frame at a sixth articulated joint; characterised firstly in that the fourth articulated joint is a joint between the auxiliary frame and the vehicle, secondly in that the first ram is connected to the first part of the loading frame, thirdly in that the first articulated joint is located between the ends of the auxiliary frame and fourthly in that the auxiliary frame and the first part of the loading frame are substantially at right angles to one another in the pick-up position when picking up an exchange platform or container resting on the ground plane.

The invention will be better understood from the following description and from the attached drawings, wherein

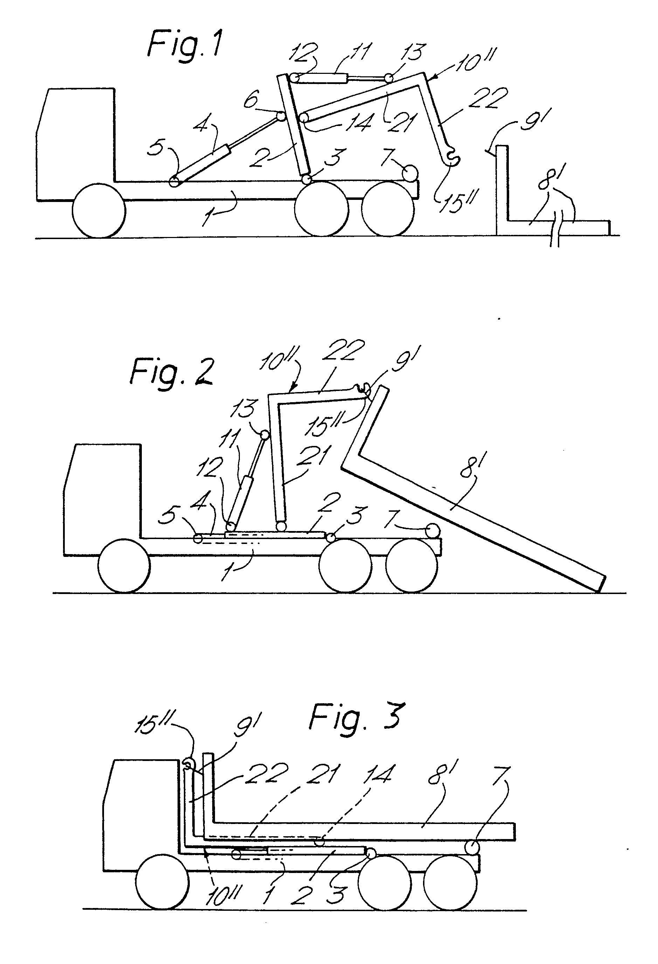

Figures 1 to 3 are schematical side views of an example of the loading and unloading equipment in accordance with the invention.

The illustrated loading equipment has an auxiliary frame 2 which is pivotally attached to chassis beams 1 of a vehicle at a pivot 3. A piston-cylinder device (ram) 4 is pivotally connected at 5 and 6 between the chassis 1 and the frame 2. Support rolls 7 are fitted at the rear ends of the chassis beams 1. A loading frame 10″ is pivotally attached at a pivot 14 to the auxiliary frame 2 and has a hook (grasping means) 15″ at its free end. A ram 11 is pivotally connected at a pivot 12 to the free end of the auxiliary frame 2 and at a pivot 13 to the loading frame 10″. Instead of the one ram 4, there may be two rams arranged in parallel. The pivot joint 14 is located intermediate the pivot joints 3 and 12.

The loading frame 10″ illustrated in Figures 1—3 comprises only a horizontal part 21 and a vertical part 22. The free end, i.e. the upper end as seen in Figure 2 of the vertical part 22 is provided with the grasping means 15″. Such loading equipment is meant for loading and unloading onto and off the vehicle an exchange platform 8′ whose grasping member 9′ is placed at the middle of the front end of the exchange platform at its upper edge. In this embodiment, the grasping means 15″ is lowered to the level of the grasping member 9′ of the exchange platform 8′, as is seen in Figure 1. The vehicle is backed towards the exchange platform 8′ so that the grasping means 15″ engages the grasping member 9′. Hereupon the auxiliary frame 2 is pulled by means of the main cylinder-piston device 4 to the position shown in Figure 2. The loading frame 10″ follows along with the auxiliary frame 2, and the loading frame 10″ in turn pulls the exchange platform 8′ partly onto the vehicle 1. Next, by contracting the cylinder-piston device 11, the loading frame 10″ is brought to its transport position, which is seen in Figure 3. The unloading of the exchange platform 8′ off the vehicle takes place in the sequence opposite to that described above.

The illustrated embodiment of loading equipment is an automatic set of exchange-platform equipment controlled from the driver's cabin of the truck. Thus, the driver does not have to leave the cabin of the vehicle when he operates the equipment.

The path of movement of the loading equipment in accordance with the invention is relatively low. Because of this, operation is also possible in spaces covered by ceiling. Of course, the loading equipment may be additionally provided with the possibility of horizontal shifting, whereby pushing of the exchange platform onto a loading ramp is facilitated.

**Claim**

Equipment for loading and unloading an exchange platform or a container onto a vehicle located on a ground plane, the equipment comprising an auxiliary frame (2) mounted for pivoting about an articulated joint (3) located a substantial distance forwardly of the rear of the vehicle and herein referred to as a fourth articulated joint, an L-shaped loading frame (10'') having a first part (21) one of whose ends is pivotably attached by a first articulated joint (14) to the auxiliary frame (2) and a second part (22) whose free end is provided with a grasping means (15'') for engaging a grasping member (9') of the platform (8') or container; the equipment further comprising a first cylinder-piston means herein called a first ram (11) for pivoting the loading frame (10'') relative to the auxiliary frame (2), the first ram (11) having one end pivotally connected to the auxiliary frame (2) at a second articulated joint (12) and the other end pivotally connected to the loading frame (10'') at a third articulated joint (13), the first articulated joint (14) being located intermediate the second and fourth articulated joints (12 and 3); a second ram (4) having one end pivotally connected to the vehicle at a fifth articulated joint (5) and its other end pivotally connected to the auxiliary frame (2) at a sixth articulated joint (6); characterised firstly in that the fourth articulated joint (3) is a joint between the auxiliary frame (2) and the vehicle, secondly in that the first ram (11) is connected to the first part (21) of the loading frame (10''), thirdly in that the first articulated joint (14) is located between the ends of the auxiliary frame (2), and fourthly in that the auxiliary frame (2) and the first part (21) of the loading frame (10'') are substantially at right angles to one another in the pick-up position when picking up an exchange platform or container resting on the ground plane.

**Patentanspruch**

Einrichtung zum Aufladen und Abladen einer Wechselplattform oder eines Containers auf bzw. von einem auf einer Bodenfläche stehenden Fahrzeug, wobei die Einrichtung einen schwenkbaren Hilfsrahmen (2), der um eine mit beträchtlichem Abstand zum rückwärtigen Ende des Fahrzeuges angeordnete und hier als vierte Gelenkverbindung bezeichnete Gelenksverbindung (3) und einen L-förmigen Laderahmen (10'') umfaßt, der einen ersten Teil (21), von dem ein Ende mittels einer ersten Gelenkverbindung (14) am Hilfsrahmen (2) befestigt ist, und einen zweiten Teil (22) aufweist, dessen freies Ende mit Greifmitteln (15'') versehen ist, die in ein Greifelement (9') der Plattform (8') oder des Containers eingreifen; die Einrichtung umfaßt weiters erste Zylinder-Kolbenmittel zum Schwenken des Laderahmens (10'') relativ zum Hilfsrahmen (2), die hier als erster Arbeitskolben (11) bezeichnet werden, wobei ein Ende des ersten Arbeitskolbens (11) über eine zweite Gelenkverbindung (12) mit dem Hilfsrahmen (2) schwerkbar verbunden ist und das andere Ende über eine dritte Gelenkverbindung (13) mit dem Laderahmen (10'') schwenkbar verbunden ist, und die erste Gelenkverbindung (14) zwischen der zweiten und vierten Gelenkverbindung (12 und 13) angeordnet ist; und einen zweiten Arbeitskolben (4), dessen eines Ende über eine fünfte Gelenkverbindung (5) mit dem Fahrzeug schwenkbar verbunden ist und dessen anderes Ende über eine sechste Gelenkverbindung (6) mit dem Hilfsrahmen (2) schwenkbar verbunden ist; dadurch gekennzeichnet, daß erstens die vierte Gelenkverbindung (3) eine Verbindung zwischen dem Hilfsrahmen (2) und dem Fahrzeug ist, daß zweitens der erste Arbeitskolben (11) mit dem ersten Teil (21) des Laderahmens (10'') verbunden ist, daß drittens die erste Gelenkverbindung (14) zwischen den Enden des Hilfsrahmens (2) angeordnet ist, und daß viertens der Hilfsrahmen (2) und der erste Teil (21) des Laderahmens (10'') in der Aufladestellung beim Aufnehmen einer auf der Bodenebene stehenden Wechselplattform oder eines Containers im wesentlichen im rechten Winkel zueinander liegen.

**Revendication**

Equipement pour charger une plate-forme interchangeable ou un récipient sur un véhicule situé sur un plan de base, ou l'en décharger, l'équipement comprenant un cadre auxiliaire (2) monté pour pivoter autour d'un joint articulé (3) situé à une distance notable en avant de l'arrière du véhicule et qui est appelé ici le quatrième joint articulé, un cadre de chargement (10'') en forme de L qui comprend une première partie (21) dont une des extrémités est articulée sur le cadre auxiliaire (2) par un premier joint articulé (14) et une deuxième partie (22) dont l'extrémité libre est munie de moyens de prise (15'') pour attaquer un élément de prise (9') de la plate-forme (8') ou de la benne; l'équipement comprenant en outre des premiers moyens à cylindre-piston, que l'on appellera ici un premier vérin (11), servant à faire pivoter le cadre de chargement (10'') par rapport au cadre auxiliare (2), le premier vérin (11) ayant une extrémité articulée sur le cadre auxiliaire (2), en un deuxième joint articulé (12), et l'autre extrémité articulée sur le cadre de chargement (10''), en un troisième joint articulé (13), le premier joint articulé (14) étant placé entre le deuxième et le quatrième joints articulés (12 et 3);

et un deuxième vérin (4) ayant une extrémité articulée sur le véhicule, en un cinquième joint articulé (5), et son autre extrémité articulée sur le cadre auxiliaire (2), en un sixième joint articulé (6), caractérisé, premièrement, en ce que le quatrième joint articulé (3) est un joint interposé entre le cadre auxiliaire (2) et le véhicule, deuxièmement, en ce que le premier vérin (11) est relié à la première partie (21) du cadre de chargement (10''), troisièmement, en ce que le premier joint articulé (44) est situé entre les extrémités du cadre auxiliaire (2) et, quatrièmement, en ce que le cadre auxiliaire (2) et la première partie (21) du cadre de chargement (10'') sont sensiblement perpendiculaires entre eux dans la position d'enlèvement lorsqu'on enlève une plateforme interchangeable on une benne qui repose sur le plan du sol.

Fig.1

Fig. 2

Fig. 3

1